# EUROPEAN PATENT APPLICATION

(11) **EP 1 073 300 A2**
(43) Date of publication of application: **31.01.2001**
(21) Application number: 00305917.7
(22) Date of filing: 12.07.2000
(51) Int. Cl.: H04Q 7/38

(54) **Method providing variable information to wireless system users**

(30) Priority: 30.07.1999 US 365266
(71) Applicant: Nortel Networks Limited, Montreal, Quebec H2Y 3Y4 (CA)
(72) Inventor: Stephens, Gary Boyd, Richardson, Texas 75082 (US)
(74) Representative: Christophers, Rachel Alder

(57) **Abstract**

A method provides variable information to wireless system users by broadcasting the variable information in an overhead message train for the wireless system. Preferably, the variable information is included in a service identifier list, which may be a private service identifier list or a restricted service identifier list.

## Description

### FIELD OF THE INVENTION

The present invention relates generally to the field of wireless telephony, and more particularly to a method of providing variable or temporary information to wireless telecommunications system users.

### DESCRIPTION OF THE PRIOR ART

A primary goal of operators of wireless telecommunications systems is to maximize profits. A wireless telecommunications system is essentially a fixed cost operation. A principal element of the cost of the system is the capital investment in the system infrastructure. The profitability of a wireless system is, accordingly, primarily a function of system revenue. System revenue is dependent upon the amount of system usage multiplied by the usage rate or rates. Usage rates are set for the most part to meet competition. Thus, the only practical way to increase profit is to increase system usage.

System operators may attempt to increase system usage by reducing rates during periods in which the system infrastructure is underutilized. For example, system usage is highly dependent upon time of day and day of week. Typically, a system has a heavy volume of voice calls during the morning and afternoon weekday commute times. Accordingly, usage rate are typically the highest for weekdays during a period a few hours before and after working hours. During the evenings, system operators offer reduced rates in order to encourage subscribers to make calls. Data subscribers take advantage of the reduced evening rates by making circuit data calls during evening. The host machines of data subscribers are typically programmed to transmit data automatically a certain time at night.

There are times when an operator may wish to offer a temporary rate reduction. For example, an operator may encounter a temporary and unexpected drop in system usage. By reducing the usage rate, the operator could encourage subscribers to make calls. However, there is currently no system by which an operator can advise subscribers in real-time of such rate reductions. Traditional communications means such as mail are too slow to be effective in a real-time situation. A short message service (SMS) system can be used to provide real-time information, but using the short message service system requires making a call to each individual subscriber, which is relatively inefficient.

It is therefore an object of the present invention to provide a system and method for providing variable or temporary information to wireless system subscribers.

### SUMMARY OF THE INVENTION

The present invention provides variable information to wireless system users by broadcasting the variable information in an overhead message train for the wireless system. Preferably, the variable information is included in a service identifier list, which may be a private service identifier (PSID) list or a restricted service identifier (RSID) list.

An example of variable information provided according to the present invention is temporary usage rate information. If the wireless system is experiencing a period of underutilization, the operator may temporarily reduce usage rates in order to entice users to make calls. The wireless system may include an automated system for monitoring system utilization, and automatically reducing rates when system utilization drops below a threshold value. When the utilization rises above the threshold, the system restores the usage rate to its normal value and discontinues broadcasting the reduced rate message.

The variable information provided according to the present invention is particularly useful for users that transmit data over the wireless system. A host machine that is configured to transmit queued data at off-peak times can monitor the overhead message train of the wireless system. If the host machine receives a message that usage rates have been reduced below a trigger value, the host machine may transmit the data.

The present invention may also be used to provide non-system related information to users. For example, the present invention may provide such information as local highway traffic information or local weather information, such as thunderstorm and tornado warnings.

The invention provides methods according to Claims 1, 6, 12 and 16; an apparatus as claimed in Claim 24; a terminal as claimed in Claim 25; and a computer program as claimed in Claim 26.

### BRIEF DESCRIPTION OF THE DRAWINGS

Figure 1 is a block diagram of a system according to the present invention.
Figure 2 is a flowchart of a process for monitoring wireless system utilization and automatically broadcasting temporary usage rate reduction information according to the present invention.
Figure 3 is a flowchart of a process for alerting a user of a usage rate reduction according to the present invention.
Figure 4 is a flowchart of a process for transmitting data according to the present invention.

### DESCRIPTION OF THE PREFERRED EMBODIMENT

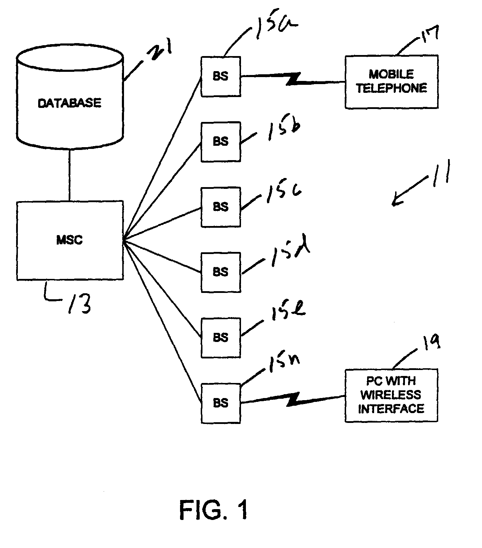

Referring now to the drawings, and first to Figure 1, a system according to the present invention is designated generally by the numeral 11. System 11 includes a mobile switching center (MSC) 13 and a plurality of base stations 15. The architecture and operation of a wireless system including an MSC and base stations is generally well known to those skilled in the art.

System 11 is adapted to provide telecommunications services to subscribers. Subscribers access the services provided by system 11 through devices such as mobile telephones 17 and personal computers (PCs) 19, or other host machines, with wireless interfaces. In the manner well-known a skilled art, subscribers use telephones 17 to make voice calls. Subscribers may use PCs 19 to make circuit data calls.

In addition to normal voice channels, each base station 15 transmits signaling and other information over a digital control channel (DCCH). Included among the information transmitted over the DCCH is an overhead message train (OMT). The OMT broadcasts information to the mobile devices in the area serviced by the base station. The OMT is encoded with information such as how often a mobile device should register. The OMT may also include a service identifier list, which may be either a private service identifier (PSID) list or a restricted service identifier (RSID) list. A service identifier list typically consists on a few bytes of information that identifies the service provider in the area. Wireless devices, such as mobile telephones 17, monitor the OMT. Mobile telephones 17 include lookup tables, or the like, that enable them to decode the information in the service identifier list. Mobile telephones 17, typically include a display is adapted to display the service identifier list information. The system of the present invention uses the OMT, and particularly the service identifier list, to provide temporary or variable information to subscribers. In one aspect of the present invention, the variable information is temporary usage rate information based upon system data, such as system usage levels. System data are maintained in a database, indicated generally at 21, maintained by, and accessible to, MSC 13. The system of present invention may also be used to provide other variable or temporary information to subscribers, such as local traffic or weather conditions.

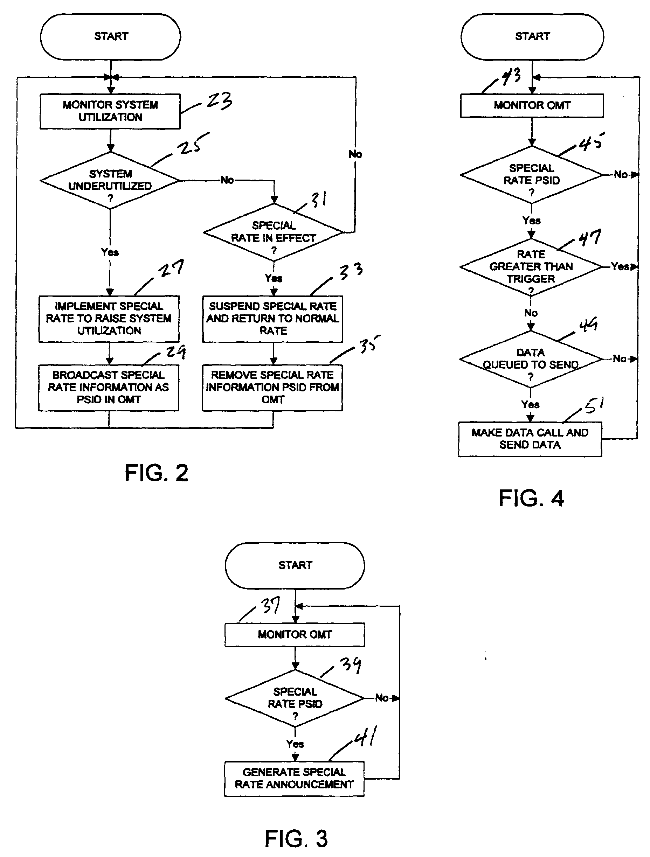

Referring now to Figure 2, there is shown a flowchart of a system according to the present invention for automatically adjusting usage rates based upon system utilization. A processor monitors system utilization at block 23. Periodically, the processor determines, at decision block 25, if the system is underutilized. If so, the processor implements a special rate designed to raise system utilization, at block 27, and broadcasts the special rate information as a PSID in the OMT, at block 29. If, at decision block 25, the system is not underutilized, then the processor determines, at decision block 31, if a special rate is in effect. If not, processing returns to block 23. If, at decision block 31, a special rate is in effect, then the processor suspends the special rate and returns to the normal rate, at block 33, and removes the special rate information from the OMT, at block 35.

Referring now to Figure 3, there shown a flowchart of processing according to the present invention performed a wireless device, such as a cellular telephone. The cellular telephone monitors the OMT, as indicated at block 37. If, at decision block 39, the cellular telephone detects a special rate PSID, the cellular telephone generates a special rate announcement, at block 41. The special rate announcement may be a special ringing tone to alerts the user to look at the display.

The method of the present invention is particularly adapted for use with host machines programmed to make circuit data calls. Such machines are typically programmed to transmit data during the night in order to take advantage of lower usage rates. However, a host machine may be programmed to monitor the OMT and transmit data when the wireless system announces a temporary rate reduction according to the present invention.

Referring to Figure 4, there is shown a flowchart of processing performed by a host machine according to the present invention. The host machine monitors the OMT, at block 43. If, at decision block 45, a host machine detects a special rate PSID, the host machine determines if the rate is greater than a trigger, at decision block 47. The trigger is set up by the operator of the host machine. The trigger may be equal to the evening rate, or some higher rate that is justified by being able to transmit the data earlier. In any event, if the special rate is equal to or less than the trigger, the host system determines, at decision block 49, if it has a data queued to send. If so, the host machine makes a data call and sends the data, at block 51.

The methods described herein may be implemented using any suitable computer program(s) executed on any suitable computing platform or processor. These computer programs may be provided on computer readable media as computer program products. The mobile telephones 17 and personal computers 19 are examples of terminals in a wireless communications network.

From the foregoing, the present invention provides an efficient method for communicating temporary or variable information to users of wireless systems. The system uses the existing OMT to increase system utilization. Those skilled in the art, given the benefit of the foregoing disclosure, will appreciate that alternative embodiments of the invention exist. The foregoing disclosure is intended to illustrate, and not to limit the invention.

## Claims

1. A method of providing variable information to wireless system users, which comprises the step of: broadcasting said variable information in an overhead message train for said wireless system.

2. The method as claimed in claim 1, wherein said step of broadcasting said variable information includes the step of including said variable information in a service identifier list in said overhead message train.

3. The method as claimed in claim 1, wherein said variable information includes temporary usage rate information.

4. The method as claimed in claim 1, including the step of:
monitoring a condition in said wireless system, and wherein said variable information is based upon said condition.

5. The method as claimed in claim 4, wherein said condition includes system utilization, and wherein said variable information includes a temporary usage rate based upon said system utilization.

6. A method of providing information to users of a wireless system, which comprises the steps of:
monitoring a condition in said wireless system;
in response to detection of a change in said monitored condition, making a response to said change; and,
broadcasting said response to users of said wireless system.

7. The method as claimed in claim 6, wherein:
said monitored condition is system utilization;
said change is system under utilization; and,
said step of making a response includes the step of reducing a usage charge rate for said system.

8. The method as claimed in claim 6, wherein said step of broadcasting said response includes the step of: including said response in an overhead message train for said wireless system.

9. The method as claimed in claim 8, wherein said step of broadcasting said response includes the step of: including said response in a service identifier list in said overhead message train.

10. The method as claimed in claim 6, including the step of:
continuing to broadcast said response as long as said change in said monitored condition exits.

11. The method as claimed in claim 10, wherein:
said monitored condition is system utilization;
said change is system under utilization; and,
said step of making a response includes the step of reducing a usage charge rate for said system.

12. A method of transmitting data over a wireless network, which comprises the steps of:
monitoring an overhead message train for said wireless network;
in response to receipt of a usage rate message over said overhead message train, transmitting data over said wireless network.

13. The method as claimed in claim 12, wherein said usage rate message is a usage rate reduction message.

14. The method as claimed in claim 13, wherein said step of transmitting said data includes the step of transmitting said data if said usage rate is reduced below a trigger level.

15. The method as claimed in claim 12, wherein said usage rate message is included in a service identifier list.

16. A method of providing information to users of a wireless system, which comprises the steps of:
monitoring a condition;
in response to detection of a change in said monitored condition, broadcasting a message to users of said wireless system.

17. The method as claimed in claim 16, wherein said monitored condition is a condition in said network.

18. The method as claimed in claim 17, wherein said monitored condition system utilization.

19. The method as claimed in claim 18, wherein said message advises said users of usage rate information for said network.

20. The method as claimed in claim 16, wherein said message is broadcast in a overhead message train for said wireless network.

21. The method as claimed in claim 20, wherein said message is included in a service identifier list.

22. The method as claimed in any of claims 21, 2, 9, or 19 wherein said service identifier list is a private service identifier list.

23. The method as claimed in any of claims 21, 2, 9, or 19 wherein said service identifier list is a restricted service identifier list.

24. An apparatus for providing variable information to wireless system users comprising a processor arranged to broadcast the variable information in an overhead message train for said wireless system.

25. A terminal in a wireless communications network comprising:
An input arranged to receive variable information in an overhead message train;
A decoder arranged to decode said variable information;
A display arranged to display said decoded information to a user.

26. A computer program arranged to control an apparatus for providing variable information to wireless system users said computer program being arranged to control the apparatus such that variable information is broadcast in an overhead message train for said wireless system.
